# EUROPEAN PATENT APPLICATION

(11) **EP 4 026 945 A1**
(43) Date of publication of application: **13.07.2022**
(21) Application number: 21150591.2
(22) Date of filing: 07.01.2021
(51) Int. Cl.: D06P 1/00, D06P 1/22, D06P 1/44, D06P 1/24, D06B 23/14, C08B 37/16

(54) **ENCAPSULATED INDIGO**

(71) Applicant: Calik Denim Tekstil San. Ve Tic. A.S., 34169 Istanbul (TR)
(72) Inventor: Karaduman, Ahmet Serhat, 44900 Yesilyurt, Malatya (TR); Genç, Ayse, 44900 Yesilyurt, Malatya (TR); Göktekin, Abdulgani, 44900 Yesilyurt, Malatya (TR); Erkoç, Merve, 44900 Yesilyurt, Malatya (TR)
(74) Representative: Schmid, Nils T.F.

(57) **Abstract**

The present invention relates to an encapsulated dye, comprising a dye, preferably a vat dye, and an encapsulating agent, preferably a cyclodextrin. The present invention further relates to a dye formulation for dyeing a fiber, a yarn comprising a fiber, and/or a fabric comprising a fiber, wherein said fiber is preferably a synthetic fiber. The present invention also relates to a method of preparing an encapsulated dye and/or a dye formulation, and to a method of dyeing. Furthermore, the present invention relates to a fiber, a yarn, and/or a fabric comprising an encapsulated dye, and to a fiber, a yarn, and/or a fabric dyed with an encapsulated dye. Moreover, the present invention relates to an installation for dyeing, and to uses of a cyclodextrin, an encapsulated dye, and an installation.

## Description

### FIELD OF THE INVENTION

The present invention relates to an encapsulated dye, comprising a dye, preferably a vat dye, and an encapsulating agent, preferably a cyclodextrin. The present invention further relates to a dye formulation for dyeing a fiber, a yarn comprising a fiber, and/or a fabric comprising a fiber, wherein said fiber is preferably a synthetic fiber. The present invention also relates to a method of preparing an encapsulated dye and/or a dye formulation, and to a method of dyeing. Furthermore, the present invention relates to a fiber, a yarn, and/or a fabric comprising an encapsulated dye, and to a fiber, a yarn, and/or a fabric dyed with an encapsulated dye. Moreover, the present invention relates to an installation for dyeing, and to uses of a cyclodextrin, an encapsulated dye, and an installation.

### BACKGROUND OF THE INVENTION

Denim jeans are typically made from cotton warp-faced fabric in which the weft passes under two or more warp threads. It can have a 1/2, or 2/1 or 3/1 twill structure and is woven diagonally, i.e. the twill weaving produces a diagonal ribbing. While the warp thread, which generally forms the outer layer, is dyed, usually with indigo, the weft thread forming the inner side of the fabric is left white. Typically, in common indigo dyeing processes, the core of the warp threads remains white while the outer layer is colored. This phenomenon is called ring dyeing. Since indigo itself is not soluble in water (990 µg/L at 25 °C), typically the reduced, water-soluble form of indigo, i.e. leuco-indigo, is employed in the dyeing step. However, even the leuco-form of indigo mostly has a rather low affinity to the fiber materials to be dyed, thereby requiring a number of repeated treatment and dyeing steps. In practical use, indigo is reduced under alkaline conditions with sodium dithionate to leuco-indigo. Depending on the pH of the aqueous system, leuco-indigo may occur in the mono-anion form, which is present at about pH 11 and which has better ring-dyeing properties due to less pronounced penetration characteristics, or in the di-anion form. Oxidation by air converts the yellow-colored leuco-indigo back to the blue-colored indigo. Typically, indigo dyeing involves dissolving the dye by reduction in alkaline medium, dyeing in a vat, and oxidation by exposure to air.

While indigo-dyed denim fabrics are regularly made from cotton fibers, there have also been attempts to manufacture blue colored denim-like fabrics from synthetic fibers. Synthetic fibers, such as polyester fibers, are extremely difficult to dye, especially if the fabric consists of 100% polyester. Polyester is a synthetic material made from petroleum. It is hydrophobic and lacks ionic properties. Therefore, sufficient pick-up of dye in a dyeing process is very difficult to achieve. In order to improve the dyeing process, the fibers usually have to be subjected to pretreatment steps such as pre-wetting, bottom dyeing, or washing. Therefore, dyeing synthetic fibers is very difficult, and enhanced means for dyeing synthetic fibers are needed.

Colored synthetic fibers can be obtained by the so-called dope dyeing process. With the dope dyeing process, a dye is mixed with the molten polymer forming the synthetic fiber before the fibers are extruded through spinnerets for making synthetic filaments. Dope dyeing provides synthetic fibers which are homogeneously colored throughout the cross-section of the filament. Hence, with dope dyed synthetic fibers, any fading characteristics being specific for indigo-dyed denim fabrics cannot be obtained. Therefore, means for dyeing synthetic fibers for denim fabrics, such as denim fabrics having typical fading characteristics, particularly denim fabrics having a used-look, are needed.

According to US 2,774,647, polyester fibers can be dyed by subjecting said fibers to a dyebath containing leuco-indigo, a reducing agent, and sodium tripolyphosphate as a buffer, with a pH between 6.5 and 7.5 at a temperature in the range of 100°C to about 144°C, and by oxidizing the thus treated fibers with an aqueous solution comprising hydrogen peroxide.

According to US 4,369,213, processes for dyeing polyester fibers with indigo failed in providing the fading characteristics and were thus not able to adequately simulate indigo-dyed cotton fibers. This, however, shall be accomplished based on the teaching of US 4,369,213 by applying to a polyester fiber a coating comprising polyvinyl alcohol and a water-soluble polyamide containing secondary amino groups in the polymer chain which have been reacted with epichlorohydrine, and curing said coating. A fabric obtained from said coated polyester fibers was then treated with an aqueous alkaline leuco-indigo solution and subsequently subjected to an oxidation step by having it exposed to a stream of air. This multistep process requires the use of two different types of polymers which renders it cumbersome per se and also impractical for any recycling efforts. Accordingly, there is a need for a reliable method and means for dyeing polyester fibers which can be used for the manufacture of denim-like fabrics.

WO 2019/145020 A1 relates to processes and installations for dyeing synthetic fibers involving pretreating synthetic fibers. There remains the need for enhanced means for dyeing synthetic fibers. Therefore, the invention aims at providing means, such as a dye formulation, a method, and an installation for dyeing fibers, particularly synthetic fibers, e.g. polyester fibers, which are not hampered by the drawbacks of existing methods and which provide dyed polyester fibers having the fading characteristics which are typical for indigo-dyed denim fabrics. Furthermore, it is an aim of the invention to provide means for gently dyeing synthetic fibers, for example means that that allow dyeing at about neutral pH, thereby preventing fiber damage. It is also an aim of the invention to provide efficient means for dyeing synthetic fibers, such as time-efficient and/or cost-efficient means. Additionally, it is an aim of the invention to provide enhanced means for dyeing synthetic fibers with vat dyes, such as indigo.

### SUMMARY OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In a first aspect, the present invention relates to an encapsulated dye, comprising a dye, preferably a vat dye, and an encapsulating agent, preferably a cyclodextrin.

In one embodiment, said encapsulating agent, preferably said cyclodextrin, comprises any of α-cyclodextrin, β-cyclodextrin, γ-cyclodextrin, δ-cyclodextrin, hydroxypropyl-α-cyclodextrin, hydroxypropyl-β-cyclodextrin, hydroxypropyl-γ-cyclodextrin, hydroxypropyl-δ-cyclodextrin, guar gum, fullerene, and combinations thereof, preferably β-cyclodextrin and/or hydroxypropyl-β-cyclodextrin, wherein said cyclodextrin optionally comprises a modification selected from o-methylation and acetylation.

In one embodiment, said dye is a vat dye, preferably selected from the group consisting of indigo, indigoid dyes, such as isoindigo, indirubin, and 6,6'-dibromoindigo, e.g. Tyrian purple, indanthren dyes, anthrachinon dyes, anthraquinone dyes, naphthalene dyes, and mixtures thereof; and/or the dye is a precursor dye, preferably a leuco dye selected from the group consisting of leuco-indigo, leuco-indigoid dyes, such as leuco-isoindigo, leuco-indirubin, and leuco-6,6'-dibromoindigo, e.g. leuco-Tyrian purple, leuco-indanthren dyes, leuco-anthrachinon dyes, leuco-anthraquinone dyes, leuco-naphthalene dyes, and mixtures thereof.

In a further aspect, the present invention relates to a dye formulation for dyeing a fiber, a yarn comprising a fiber, and/or a fabric comprising a fiber, wherein said fiber is preferably a synthetic fiber, wherein said dye formulation comprises an encapsulated dye, as defined above, and further comprises any of water, a reducing agent, a base, a binder, a migration inhibitor, a dispersing agent, a wetting agent, a thickener, and mixtures thereof.

In one embodiment, said reducing agent comprises any of thiourea dioxide, sodium dithionite, sodium hydrogen sulphite, hydroxyacetone, sodium hydroxymethylsulfinate, borohydride, ISOPON FPS, and mixtures thereof; and/or said reducing agent has a concentration in the range of 1 g/L to 500 g/L, preferably 20 g/L to 350 g/L, more preferably 50 g/L to 250 g/L; and/or
said base comprises any of ammonia, alkali hydroxide, e.g. caustic soda, and mixtures thereof, preferably ammonia; and/or said base has a concentration in the range of 0 g/L to 50 g/L, preferably 0 g/L to 10 g/L, more preferably 0 g/L to 5 g/L; and/or
said binder comprises any of a polyurethane, polyacrylate, a condensation product of an aliphatic polyamine and epihalohydrine, and a mixture thereof; and/or said binder has a concentration in the range of 0 g/L to 500 g/L, preferably 0 g/L to 150 g/L; and/or
said migration inhibitor comprises any of a polyacrylic acid or a derivative thereof, e.g. IRGAPADOL MP, or a mixture thereof; and/or said migration inhibitor has a concentration in the range of 0 g/L to 50 g/L, preferably 10 g/L to 30 g/L; and/or
said dispersing agent comprises any of an alkyl sulphate, alkylaryl sulphonate, fatty alcohol, condensation product of an amine and ethylene oxide, condensation product of naphthalene sulphonic acid and formaldehyde, e.g. SETAMOL WS, lignin sulphonate, and mixtures thereof; and/or said dispersing agent has a concentration in the range of 1 g/L to 50 g/L, preferably 3 g/L to 15 g/L; and/or
said wetting agent comprises any of an organic hydroxy compound, a phosphoric acid ester, e.g. LEONIL EHC, Lava^{®} Wet MDF, and mixtures thereof; and/or said wetting agent has a concentration in the range of 1 g/L to 30 g/L, preferably 1 g/L to 10 g/L; and/or
said thickener comprises an acrylic polymer, e.g. GEL FTR (LIQ); and/or said thickener has a concentration in the range of 1 g/L to 30 g/L, preferably 8 g/L to 15 g/L; and/or
said dye has a concentration in the range of 1 g/L to 500 g/L, preferably 5 g/L to 250 g/L, more preferably 20 g/L to 120 g/L; and/or
said encapsulating agent, preferably said cyclodextrin, has a concentration in the range of 1 g/L to 800 g/L, preferably 20 g/L to 500 g/L, more preferably 40 g/L to 250 g/L.

In this aspect, said encapsulated dye, said dye, and said encapsulating agent are as defined above.

In a further aspect, the present invention relates to a method of preparing an encapsulated dye, preferably as defined above, and/or a dye formulation, preferably as defined above, comprising
i) providing a dye, preferably a vat dye, and an encapsulating agent, preferably a cyclodextrin, optionally further providing any of water, a reducing agent, a base, a binder, a migration inhibitor, a dispersing agent, a wetting agent, a thickener, and mixtures thereof,
ii) mixing said dye and said encapsulating agent, optionally admixing said water, reducing agent, and/or base,
iii) optionally further admixing any of a binder, a migration inhibitor, a dispersing agent, a wetting agent, a thickener, and mixtures thereof.

In one embodiment, said (ad)mixing of step ii) is performed at a temperature of from 1 °C to 100 °C, preferably 35 °C to 65 °C, more preferably 45 °C to 55 °C, e.g. 50 °C; and/or
said admixing of step iii) is performed at a temperature of from 1 °C to 100 °C, preferably 10 °C to 55 °C, more preferably 20 °C to 28 °C, e.g. 25 °C; and/or
said (ad)mixing of step ii) and/or iii) is performed for a period of from 1 sec to 48 h, preferably 1 min to 5 h, more preferably 3 min to 2 h, e.g. about 1 h; and/or
said (ad)mixing of step ii) and/or iii) is performed by stirring, preferably at revolutions per minute in the range of from 500 to 2000 rpm, more preferably from 1000 to 1500 rpm.

In one embodiment, said dye is provided at a concentration in the range of 1 g/L to 500 g/L, preferably 5 g/L to 250 g/L, more preferably 10 g/L to 80 g/L; and/or
said encapsulating agent, preferably said cyclodextrin, is provided at a concentration in the range of 1 g/L to 800 g/L, preferably 20 g/L to 250 g/L, more preferably 30 g/L to 150 g/L; and/or
said reducing agent is provided at a concentration in the range of 0 g/L to 500 g/L, preferably 0 g/L to 250 g/L, more preferably 0 g/L to 80 g/L; and/or
said base is provided at a concentration in the range of 0 g/L to 50 g/L, preferably 0 g/L to 10 g/L, more preferably 0 g/L to 5 g/L.

In this aspect, said encapsulated dye, said dye, said encapsulating agent, said reducing agent, said base, said binder, said migration inhibitor, said dispersing agent, said wetting agent, said thickener, and said dye formulation are preferably as defined above.

In a further aspect, the present invention relates to a method of dyeing a fiber, a yarn comprising a fiber, and/or a fabric comprising a fiber, wherein said fiber is preferably a synthetic fiber, wherein said method comprises the steps:
i) providing a fiber, a yarn comprising a fiber, and/or a fabric comprising a fiber, wherein said fiber is preferably a synthetic fiber,
ii) providing an encapsulated dye, as defined above, and/or a dye formulation comprising an encapsulated dye, as defined above,
iii) optionally, pretreating said fiber, yarn, and/or fabric,
iv) dyeing said fiber, yarn, and/or fabric, optionally pretreated fiber, yarn, and/or fabric, with said encapsulated dye and/or dye formulation,
v) optionally, fixing said dye on said fiber, yarn, and/or fabric,
vi) optionally, washing said fiber, yarn, and/or fabric at a temperature of from 1 to 100 °C, preferably of from 10 to 70 °C, more preferably of from 20 to 60 °C.

In one embodiment, said dyeing is performed at a pH in the range of from pH 4.5 to 10, preferably in the range of from pH 5 to 9.5, more preferably in the range of from pH 5 to 9, e.g. neutral pH; and/or
said dyeing is performed at a temperature of from 3 °C to 80 °C, preferably 7 °C to 40 °C, more preferably 20 °C to 25 °C; and/or
said dyeing is performed at a pressure of from 10 kPa to 10.000 kPa, preferably at atmospheric pressure; and/or
said dyeing is performed for a period of from 1 sec to 48 h, preferably 0.5 min to 8 h, more preferably 1 min to 2 min.

In one embodiment, said fixing is performed at a temperature of from 70 °C to 200 °C, preferably of from 100 °C to 180 °C, more preferably of from 140 °C to 160 °C, e.g. 150 °C, for a period of 10 sec to 10 min, preferably 30 sec to 5 min, more preferably 1 min to 3 min.

In one embodiment, said method further comprises a step of drying said fiber, yarn, and/or fabric at a temperature of from 70 °C to 200 °C, preferably of from 90 °C to 170 °C, more preferably of from 110 °C to 160 °C, e.g. 120 °C to 160 °C or 110 °C to 120 °C, for a period of 1 sec to 10 min, preferably 30 sec to 5 min, more preferably 1 min to 4 min, wherein said drying is performed prior to or after said dyeing and/or prior to or after said fixing, preferably in between said dyeing and said fixing.

In one embodiment, said pretreating comprises a pretreatment of said fiber, yarn, and/or fabric with any of a lipase enzyme, such as lipase from Candida sp., nano-sized polyurethane particles, and/or a base.

In one embodiment, said providing of step ii) involves a method of preparing an encapsulated dye and/or a dye formulation, as defined above. In this aspect, said encapsulated dye, said dye, said encapsulating agent, and said dye formulation are preferably as defined above.

In a further aspect, the present invention relates to a fiber, a yarn, and/or a fabric, comprising an encapsulated dye, as defined above,
wherein, preferably, said fiber, yarn, and/or fabric comprise(s) or consist(s) of synthetic fiber(s), e.g. polyester fiber(s) or polyamide fiber(s),
wherein, optionally, said fiber, yarn, and/or fabric have a wash-fastness of 1.5 to 5, preferably 3 to 5, a light-fastness of 2 to 7, preferably 4 to 5, and/or a dry-rubbing fastness of 1 to 5, preferably 2 to 4.

In a further aspect, the present invention relates to a fiber, a yarn, and/or a fabric, dyed with an encapsulated dye, as defined above, and/or with a dye formulation, as defined above, preferably using a method, as defined above.

In a further aspect, the present invention relates to an installation for dyeing a fiber, a yarn, and/or a fabric, comprising at least one reservoir for an encapsulated dye, preferably as defined above, and/or for a dye formulation, preferably as defined above;
optionally further comprising a preparation unit, wherein the preparation unit is for preparing the encapsulated dye and/or the dye formulation comprising an encapsulated dye, preferably wherein the preparation unit and the at least one reservoir are connected.

In one embodiment, the installation is used involving a method of preparing an encapsulated dye and/or a dye formulation, as defined above, or a method of dyeing, as defined above.

In a further aspect, the present invention relates to a use of a cyclodextrin for preparing an encapsulated dye, preferably an encapsulated vat dye.

In one embodiment, said use involves a method of preparing an encapsulated dye and/or a dye formulation, as defined above. In this aspect, said encapsulated dye, said dye, said cyclodextrin (encapsulating agent) are as defined above.

In a further aspect, the present invention relates to a use of an encapsulated dye, preferably an encapsulated dye as defined above, or of a dye formulation comprising an encapsulated dye, preferably a dye formulation as defined above, for dyeing a fiber, a yarn, and/or a fabric; preferably for dyeing a fiber, a yarn comprising a fiber, and/or a fabric comprising a fiber, wherein said fiber is a synthetic fiber.

In one embodiment, said use involves a method of preparing an encapsulated dye and/or a dye formulation, as defined above, or a method of dyeing, as defined above.

In a further aspect, the present invention relates to a use of an installation, as defined above, in a method of preparing an encapsulated dye and/or dye formulation, as defined above, and/or in a method of dyeing a fiber, yarn, and/or fabric, as defined above.

### DETAILED DESCRIPTION

In conventional indigo dyeing, indigo dyes are used in reduced form involving high pH values. Synthetic fibers cannot be properly dyed under these conditions due to damaging of the fibers and high pH values and due to a lack of sufficient fixation of the dye on synthetic fibers under these conditions. A great advantage of the encapsulated dye, dye formulation, and method of dyeing of the present invention is that the dye, such as indigo dye, can be used in pigment form. Using the dye in pigment form allows for a pH value that is about neutral, such as a pH in the range of 5 to 9, thereby allowing efficient dyeing of synthetic fibers. Furthermore, the dyeing at about neutral pH prevents damage to the synthetic fibers. In one embodiment, the encapsulated dye, dye formulation, methods, and uses of the present invention advantageously allow performing dyeing at about neutral pH which enhances the dyeing process and prevents damage to synthetic fibers.

Indigo is a so-called vat dye, which means that it typically needs to be reduced to its water soluble leuco-form before dyeing. The reduced form is absorbed by the fibers, and when oxidized back to its blue form, it remains on the fiber. The present invention provides a new dye formulation, such as indigo dye formulation, which is an encapsulated dye formulation, which binds to a fiber, yarn, or fabric without the need for a reduction and oxidation process. Particularly, encapsulated dye of the present invention allows to use unreduced vat dyes, such as indigo in its pigment form. Furthermore, the encapsulated dye formulation and method of the present invention support ecological and environmental friendly production of denim products. In one embodiment, by encapsulating a dye with encapsulating agent, it is possible to bring an unreduced dye, such as pigment indigo, in solution. In one embodiment, and encapsulating agent has a hydrophilic outer shell, which allows to bring the encapsulated dye into solution, and a hydrophobic cavity, which can accommodate a dye. Thereby such encapsulating agent can be used as a vehicle for unreduced dye, namely to bring such dye in solution.

The term "encapsulated dye", as used herein, refers to a dye, such as indigo, which is encapsulated by an encapsulating agent, such as a cyclodextrin. In one embodiment, such an encapsulating agent may have a hydrophobic cavity, for example, the hydrophobic cavity of beta-cyclodextrin, and said hydrophobic cavity can house a dye. In one embodiment, said encapsulated dye is in the form of a particle, wherein an encapsulating agent, preferably cyclodextrin, forms an outer wall of said particle, wherein said dye is housed by said outer wall. In one embodiment, the terms "wall" and "shell" are used interchangeably. In one embodiment, a capsule wall is made of cyclodextrin. In one embodiment, a "capsule" of encapsulated dye may comprise one or more dye molecules and one or more cyclodextrin molecules, preferably one cyclodextrin molecule. In one embodiment, a wall of the "capsule" of the encapsulated dye merely consists of a cyclodextrin molecule, and an inner part, preferably a cavity, comprises indigo and optionally water, a reducing agent, and/or a dispersing agent. In one embodiment, an encapsulated dye is an enhanced means for dyeing synthetic fibers with vat dyes, such as indigo. In one embodiment, encapsulating a dye with an encapsulating agent stabilizes the dye. In one embodiment, lower dye concentrations are needed for dyeing fiber, yarn, or fabric, when an encapsulated dye is used compared to a non-encapsulated dye.

The term "encapsulating agent", as used herein, refers to any agent that can encapsulate a dye, e.g. an agent having a cavity, such as a hydrophobic cavity. In one embodiment, an encapsulating agent has a non-polar and/or hydrophobic internal molecular cavity and/or an intensely hydrophilic external shell. In one embodiment, such hydrophilic external shell provides an outer wall for a "capsule" of an encapsulated dye. In one embodiment, such hydrophilic external shell surrounds a cavity, for example hydrophobic cavity, that can accommodate a dye. In one embodiment, a cavity of an encapsulating agent "houses", i.e. contains, a dye. In one embodiment, the external hydrophilic shell is formed by a cyclodextrin molecule which is the encapsulating agent. In one embodiment, an encapsulating agent, particularly a cavity of such encapsulating agent, interacts with such dye, for example via hydrophobic bonding. In one embodiment, there are hydrophobic/hydrophilic interactions between the wall (e.g. cyclodextrin) and the inner part (e.g. indigo) of a capsule. In one embodiment, a non-polar and/or hydrophobic internal cavity interacts with water-insoluble dye, such as water-insoluble indigo dye. In one embodiment, an encapsulating agent forms an inclusion complex with said dye, in which the encapsulating agent, preferably a macrocyclic structure such as a cyclodextrin molecule, "hosts" the dye, i.e. the encapsulating agent is able to accommodate and to release the dye. In one embodiment, an exemplary cyclodextrin is beta-cyclodextrin or hydroxypropyl beta-cyclodextrin, e.g. KLEPTOSE^{®}, KLEPTOSE^{®} HP, or CAVASOL^{®} W7 HP TL. In one embodiment, an encapsulating agent forms a capsule wall forming a compartment for containing a dye. In one embodiment, an encapsulated dye has a capsule wall formed by the encapsulating agent, and contains, confined by the capsule wall, a dye, preferably unreduced vat dye, e.g., indigo in pigment form.

The term "dye formulation", as used herein, relates to a formulation of an encapsulated dye which is to be used for dyeing a fiber, yarn, or fabric. In one embodiment, such dye formulation is a ready-to-use formulation. In one embodiment, the dye formulation is formulated as a liquid, paste, granules, and/or powder. In one embodiment, if dyeing comprises coating, such formulation can be formulated as viscous liquid and/or paste, optionally comprising a thickener.

The term "fiber", as used herein, refers to a natural, semi-synthetic, and/or synthetic fiber. Synthetic fibers, such as polyester fibers, are sometimes spun together with natural fibers to produce a cloth with blended properties. Cotton-polyester blends can be strong, wrinkle- and tear-resistant, and reduce shrinking. In a preferred embodiment, a fiber consists of or comprises a synthetic fiber, for example polyester fiber and/or polyamide fiber. In one embodiment, the term "synthetic fiber" may also relate to semi-synthetic fibers or hybrid fibers comprising a synthetic fiber and a natural or semisynthetic fiber. In one embodiment, synthetic fibers, e.g. polyester fibers and/or polyamide fibers, are selected from the group consisting of polyethylenparticule terephthalate (PET) fibers and poly-1,4-cyclohexylenedimethylene terephthalate (PCDT) fibers. In one embodiment, polyethylene terephthalate fibers are preferred synthetic fibers, e.g. polyester fibers, used with the method of the present invention and/or to be dyed with a dye formulation or encapsulated dye of the invention. In one embodiment, the synthetic fibers are polyethylene terephthalate fibers, the yarn is made from or comprises said synthetic fibers, and/or the fabric is made from or comprises said synthetic fibers. It is also possible to employ a mixture of fibers, in particular a mixture of any of polyester fibers, polyamide fibers, and/or cotton fibers, i.e. the fibers, yarns, and/or fabrics may comprise a mixture of fibers and/or multi- or bicomponent fibers.

In one embodiment, the synthetic fiber is a multicomponent fiber, such as a bicomponent fiber. The multicomponent fiber, such as the bicomponent fiber, can be selected from the group consisting of a solid or hollow side-by-side fiber, a sheath-core fiber, an islands-in-the-sea fiber (matrix-fibril) and a segmented-pie-structure fiber. Preferably, the multicomponent, in particular the bicomponent fibers are made of poly(ethylene)terephthalate and polyethylene naphthalate, nylon-6,6 and polycyclohexylenedimethylene terephthalate (PCT), polypropylene and poly(butylene)terephthalate, nylon-6 and copolyamides, polylactic acid and polystyrene, polyacetal, in particular polyoxymethylene, and polyurethane, copolyesters and HD-polyethylene or copolyesters and LLD-polyethylene, polyolefins, in particular polypropylene, and polyamides.

The core-sheath bicomponent fibers preferably are made of a polyester core, in particular a poly(ethylene)terephthalate core, and a copolyester sheath, or of a polyester core, in particular a poly(ethylene)terephthalate core, and a polyethylene sheath, or of a polypropylene core and a polyethylene sheath, or of a polyamide core, in particular nylon-6,6, and a polyolefin sheath, in particular a polypropylene sheath. The islands-in-the-sea bicomponent fibers preferably comprise a polyolefin matrix, in particular polypropylene matrix, and polyamide, in particular polyamide fibrils, embedded in the matrix.

The yarn made of or comprising fibers suitably is a textured and/or an oriented yarn selected from the group consisting of a Low Oriented Yarn (LOY), Medium Oriented Yarn (MOY), Partially Oriented Yarn (POY), High Oriented Yarn (HOY) and Fully Oriented Yarn (FOY). A yarn can usually be considered to represent a long continuous length of interlocked fibers. Yarns are thus typically made from a multitude of fibers, e.g. from synthetic fibers or from a mixture of natural and/or synthetic fibers. A yarn can be a so-called spun yarn or a filament yarn. In one embodiment, when referring to a fiber, a yarn and/or fabric are also meant. In one embodiment, when referring to a yarn, a fiber and/or fabric are also meant. In one embodiment, when referring to a fabric, a fiber and/or yarn are also meant. In one embodiment, said fabric or yarn is prepared from synthetic fibers. In one embodiment, said fibers or yarn are formed into a fabric, and/or said fibers are formed into a yarn.

The problem underlying the present invention has also been solved by dyed fibers, in particular dyed synthetic fibers, dyed yarn, and dyed fabric obtained or obtainable according to the method as described above. The fibers, yarn, and fabrics obtained according to the method of the present invention exhibit excellent crocking properties as well as a sufficient tensile strength and tear resistance.

It has been surprisingly found how to provide dyed synthetic fibers, yarn, and fabric which essentially exhibit(s) the same fading characteristics as dyed cotton fibers, yarn, and fabric as used for conventional denim fabrics, namely using encapsulated dye or a formulation thereof. Thus, it is now possible to reliably prepare dyed synthetic fiber products, such as dyed polyester fiber yarn and fabric and/or polyamide fiber yarn and fabric, which can be used for the manufacture of denim-like fabrics.

The encapsulated dye allows to efficiently dye synthetic fibers, for example by increasing the amount of dye fixed to the fibers, and thereby advantageous colorfulness, in particular chroma and/or saturation, of the dyed fibers, yarn, or fabric can be achieved.

Dyes suitable for any aspect of the present invention comprise vat dyes, in particular selected from the group consisting of indigo, indigoid dyes, in particular isoindigo, indirubin and/or 6,6'-dibromoindigo, e.g. Tyrian purple, indanthren dyes, anthrachinon dyes, anthraquinone dyes, naphthalene dyes and mixtures thereof. Moreover, suitable precursor dyes comprise leuco dyes, in particular selected from the group consisting of leuco-indigo, leuco-indigoid dyes, in particular leuco-isoindigo, leuco-indirubin and/or leuco-6,6'-dibromoindigo, e.g. leuco-Tyrian purple, leuco-indanthren dyes, leuco-anthrachinon dyes, leuco-anthraquinone dyes, leuco-naphthalene dyes and mixtures thereof. Dyes that are used to prepare an encapsulated dye and/or dye formulation can be used in the form of a powder, granules, paste, or liquid. In one embodiment, the dye is a vat dye, preferably indigo, such as the pigment form of indigo. In one embodiment, the term "pigment form" and "unreduced form" are used interchangeably. Advantageously, the present invention allows to use unreduced dyes, such as indigo pigment.

Leuco dyes can be obtained from a corresponding vat dye by treatment in an aqueous alkaline system with a reducing agent, in particular selected from the group consisting of thiourea dioxide, sodium dithionite, sodium hydrogen sulphite, hydroxyacetone, sodium hydroxymethylsulfinate, borohydride, ISOPON FPS, and mixtures thereof, and/or such leuco dyes can be obtained by adding a reducing agent to a dye formulation.

In the meaning of present specification, the term "leuco-indigo" shall be considered to be synonymous to the reduced form of indigo. In the meaning of the present specification, when referring to the term "leuco" in the context of a dye, it shall be considered to be synonymous to the reduced form of such dye.

In one embodiment, if a dye, such as indigo, is used in unreduced form, e.g. pigment form of indigo, in a dye formulation, a reducing agent can be added to said dye formulation. In one embodiment, a dye formulation and/or encapsulated dye comprising a dye in an unreduced form, e.g. indigo pigment form, further comprises a reducing agent. In one embodiment, encapsulated dye comprises dye in reduced and/or unreduced form, preferably unreduced form. In one embodiment, the stability of the dye of an encapsulated dye is increased compared to a conventional dye used for dyeing. In one embodiment, encapsulated dye comprises dye in pigment form, i.e. unreduced form, and the stability of the dye comprised by encapsulated dye is increased compared to non-encapsulated dye.

In one embodiment, the encapsulated dye of the present invention comprises a dye and an encapsulating agent, and optionally further comprises water. For example, if a powder dye, e.g. indigo powder dye, is used to prepare an encapsulated dye, water may be added to prepare the encapsulated dye. In one embodiment, the encapsulated dye of the present invention is in the form of a liquid, a powder, granules, or a paste. In one embodiment, the term "(ad)mixing", in the context of mixing or admixing components, refers to both terms "mixing" and "admixing". In one embodiment, encapsulated dye is prepared by mixing dye and encapsulating agent, optionally water, and stirring at a temperature of about 50°C for about one hour at about 1000-1500 rpm. An exemplary encapsulated indigo dye may be prepared using 20-60 g/L indigo powder dye, e.g. indigo dye having CAS No. 482-89-3 (such as from Liyang Skyblue Chemical Co. Ltd), or 40-120 g/L liquid indigo vat solution, e.g. DyStar^{®} Indigo Vat 40% Solution, 40-250 g/L (HP) Cyclodextrin (CD), e.g. KLEPTOSE^{®}, KLEPTOSE^{®} HP, or CAVASOL^{®} W7 HP TL, optionally water, and optionally 50-250 g/L reducing agent and/or 0-10 g/L base, e.g. caustic soda (48 Be) or ammonia. An exemplary encapsulated dye formulation may be prepared using 500-900 g/L encapsulated dye, e.g. the above mentioned exemplary encapsulated indigo dye and any of water, 0-150 g/L binder, 10-30 g/L migration inhibitor, 3-15 g/L dispersing agent, and 1-10 g/L wetting agent, optionally 8-15 g/L thickener. In one embodiment, when preparing a dye formulation, the chemicals are first dissolved in water and then mixed, and the remaining volume is completed with water. In one embodiment, when a dye formulation is prepared for coating, said dye formulation preferably comprises a thickener. In one embodiment, preparing encapsulated dye comprises mixing dye with encapsulating agent, optionally further admixing water, reducing agent, and/or a base. In a preferred embodiment, preparing encapsulated dye comprises mixing dye with encapsulating agent, and optionally water. In one embodiment, preparing a dye formulation comprises mixing encapsulated dye with any of water, reducing agent, base, binder, migration inhibitor, dispersing agent, wetting agent, thickener, and mixtures thereof. In one embodiment, a method of dyeing comprises a step of preparing encapsulated dye and/or dye formulation, preferably involving a method of preparing encapsulated dye and/or dye formulation according to the invention.

In one embodiment, a binder fixes any of dye, encapsulating agent, and encapsulated dye to a fiber, preferably synthetic fiber, a yarn comprising such fiber, and/or a fabric comprising such fiber. In one embodiment, a binder provides advantageous dye fastness results. In one embodiment, a dye formulation of the invention comprises a binder and such dye formulation comprising a binder allows to achieve good dye fastness. In one embodiment, fixing is performed using a binder, preferably a binder comprised by the dye formulation. In one embodiment, a binder comprises or consists of any of a polyurethane, polyacrylate, e.g. a crosslinkable acrylic binder, a condensation product of an aliphatic polyamine and epihalohydrine, or mixtures thereof. In one embodiment, a binder is used for fixation of dye, e.g. indigo dye, on fibers, e.g. synthetic fibers, and the penetration depth of the dye can be adjusted by the fixation temperature.

In one embodiment, a polyacrylic acid or a derivative thereof is used as migration inhibitor, e.g. an aqueous solution of polyacrylic acid or a derivative thereof. In one embodiment, a migration inhibitor inhibits dye migration, for example dye migration between a back side and a front side of a fabric, and/or inhibits sublimation of an encapsulated dye.

In one embodiment, a dye formulation of the invention preferably comprises a wetting agent, such as an anionic phosphoric acid ester. In one embodiment, a method of dyeing of the invention does not comprise a washing step. In one embodiment, a method of dyeing using encapsulated dye is more efficient than conventional dyeing methods, since washing steps can be omitted. In one embodiment, because no washing step after dyeing is needed, lower indigo dye concentrations are sufficient in a method of dyeing using encapsulated indigo. In one embodiment, the dyeing efficiency using encapsulated indigo is increased compared to conventional dye, and thus lower dye concentrations are needed than in conventional dyeing. Accordingly, a method of dyeing using encapsulated indigo is more efficient than a conventional dyeing method. Particularly, a method of dyeing of the invention is more time-efficient and more cost-efficient than a conventional dyeing method. A method of dyeing of the present invention is also advantageous over conventional dyeing methods, since an aeration step for oxidation can be omitted and/or shorter dyeing times can be applied. A method of dyeing of the present invention is also advantageous over conventional dyeing methods, since 2 to 12 dipping/squeezing/airing steps used in conventional indigo dyeing can be omitted, particularly one dipping step, optionally squeezing step, is sufficient for dyeing. In one embodiment, a dyeing step is a dipping step in which the fiber, yarn, or fabric is dipped into the dye formulation. In one embodiment, the term "dye formulation" relates to a dye formulation comprising encapsulated dye.

Since several steps, such as intermediate washing steps and aeration steps can be omitted with a method of dyeing of the invention, the method of the invention is faster and more efficient than conventional dyeing methods. In one embodiment, a method dyeing further comprises a ventilation step, drying step, fixation step, washing step, and/or sanforizing step.

In one embodiment, a fiber, a yarn comprising a fiber, and/or a fabric comprising a fiber, wherein said fiber is a cotton fiber, is dyed with a dye formulation comprising encapsulated dye and a base in a concentration of 2-5 g/L. In one embodiment, a fiber, a yarn comprising a fiber, and/or a fabric comprising a fiber, wherein said fiber is a synthetic fiber, preferably polyester fiber, is dyed with a dye formulation comprising encapsulated dye and a base in a concentration of 0-2 g/L.

In one embodiment, the method of dyeing comprises only one dyeing step which is performed in only one dyeing bath. Particularly, the dye is applied in only one bath, unlike the 1-7 baths in conventional indigo dyeing. In one embodiment, the dyeing in a dyeing bath may be followed by a coating with dye. In one embodiment, a dyeing method may comprise any process of pad dry pad steam, pad steam, rope dyeing, dope dyeing, loop dyeing, ring dyeing, slasher dyeing, coating, and other processes known to a person skilled in the art.

The term "pretreating", as used herein, relates to a process of preparing fibers, yarns, and/or fabric for dyeing. In one embodiment, pretreatment enhances the dyeing results of dyeing synthetic fibers, yarn, and/or fabric. In one embodiment, a pretreatment is performed with a lipase enzyme, in particular lipase from Candida sp., for example at a temperature in the range from 25 to 60°C, preferably in the range from 30 to 50°C, and/or at a pH in the range from 4.5 to 9, preferably in the range from 5 to 8. In one embodiment, a pretreatment is carried out while said fibers, yarn, and/or fabric are wrapped on a roll. In one embodiment, pretreatment is performed as described in WO 2019/145020 A1. In one embodiment, a pretreatment step can even enhance the advantageous dyeing results obtained with an encapsulated dye and/or dye formulation.

In one embodiment, the fibers, yarn, and/or fabric are treated with at least one oxidizing agent, in particular selected from the group consisting of oxygen, air, in particular heated air, inorganic peroxo compounds, hydrogen peroxide, potassium dichromate, sodium hypochlorite, peracetic acid and mixtures thereof. In this manner leuco dyes such as leuco indigo are effectively transformed into their respective oxidized forms.

It is rather advantageous in terms of repeatable and reliable results to subject the fibers, yarn, or fabric after the dyeing step to at least one fixation step. Said fixation step preferably comprises subjecting the dyed fibers, yarn, or fabric to a temperature of from 70 °C to 200 °C, preferably of from 100 °C to 180 °C, more preferably of from 140 °C to 160 °C, e.g. 150 °C, for example for a period of 10 sec to 10 min, preferably 30 sec to 5 min, more preferably 1 min to 3 min. For example, regularly heated gas, and more preferably heated air can be used for the fixation step. In one embodiment, wash-fastness is determined by ISO 105-C06:2010, light-fastness is determined by ISO 105-B02:2014, wet rubbing fastness is determined by ISO 105-X12:2016(E), and dry rubbing fastness is determined by ISO 105-X12:2016(E). In one embodiment, the surface roughness of the fiber, yarn, or fabric dyed with an encapsulated dye is decreased compared to a fiber, yarn, or fabric dyed with a conventional dye. In one embodiment, a coloration pattern of a fiber, yarn, or fabric dyed with encapsulated indigo is similar to the coloration pattern of a fiber, yarn, or fabric dyed with conventional indigo dyeing.

In one embodiment, in order to reduce or eliminate any shrinking properties of the dyed fibers, yarn, or fabrics, the method of the present invention can further comprise a sanforizing step after the fixation step. In one embodiment, the fibers, yarn, and/or the fabric are subjected to a cationization step after a pretreatment step and prior to the dyeing step, in particular prior to the fixation step.

For fixation in the fixation step, the fibers, yarn, and/or the fabric can be treated with a binder comprised in the dye formulation and/or with at least one aqueous formulation containing at least one condensation product of an aliphatic polyamine and epihalohydrine, in particular epichlorohydrine, and/or can be heated. In one embodiment, the treatment is carried out simultaneously with heated water steam treatment. Said aqueous formulation containing the at least one condensation product may have a pH value in the range from 3 to 6, particular in the range from 3.5 to 5. Simultaneously or alternatively, the temperature of said aqueous formulation containing at least one condensation product of an aliphatic polyamine and epihalohydrine can be in the range from 40 to 95°C, and in particular in the range from 55 to 85°C. Suitable condensation products of the aliphatic polyamine and epihalohydrine can comprise a cationic reaction product of a homopolymer of diallylamine, a homopolymer of N-methyl-diallylamine or a copolymer of diallylamine and N-methyl-diallylamine with epihalohydrine, in particular with epichlorohydrine, e.g. polyamide-epichlorohydrin and/or a polyamide-epichlorohydrin resin.

In one embodiment, an installation for dyeing comprises a dyeing station, wherein a dye formulation comprising an encapsulated dye is applied to said fibers, yarn, and/or fabric. In one embodiment, an installation for dyeing comprises a drying station, wherein said fibers, yarn, and/or fabric are dried in said drying station. In one embodiment, after leaving the drying station, said fibers, yarn, and/or fabric preferably have/has a moisture content less than 1 wt.-%, preferably less than 0.5 wt.-%, more preferably less than 0.25 wt.-% of the fiber's, yarn's, or fabric's dry mass. In one embodiment, the amount of dye formulation being picked up in the dyeing station, preferably in a dyeing station subsequent to a drying station, is at least 80 %, more preferably at least 70 %, most preferably at least 60 % and/or preferably maximally 90 %, more preferably maximally 80 %, most preferably maximally 70 % of the fiber's, yarn's, multitude of yarn's, or fabric's dry mass. Dye pick-up relates to {(wet weight of fiber/yarn/fabric - dry weight of fiber/yarn/fabric)/(dry weight of fiber/yarn/fabric)}^{∗}100. In one embodiment, a dyeing station may perform dyeing by any method of transferring dye to a fiber, yarn, or fabric, for example by dipping and/or coating. In one embodiment, an installation may comprise more than one dyeing station, for example a conventional dyeing station, e.g. a dipping station, and a coating station, wherein a dye formulation is coated onto a fiber, yarn, or fabric in said coating station. For example, such more than one dyeing stations are arranged in such a way that the fibers, yarns, or fabrics are conveyed through said first dyeing station, e.g. dipping station, before being conveyed through said coating station. In one embodiment, a dyeing station can be a dyeing vat substantially filled with a dye formulation through which the fibers, yarn, or fabric is/are conveyed. In one embodiment, a dipping station and/or coating station is/are part of the dyeing station.

In one embodiment, such an installation for dyeing is supplemented by a weaving machine for weaving said fibers or yarns into a fabric after leaving the first dyeing station and before entering the second dyeing station which is a coating station. In one embodiment, such coating station comprises a knife coater, roll coater, such as mayer rod coater, direct roll coater, or gravure coater. In one embodiment, an installation comprises a drying station through which said fibers, yarns, or fabric is/are conveyed after leaving such coating station. In one embodiment, coating, e.g. coating carried out in a coating station, is conducted using knife coating or rotary printing. In one embodiment, when performing a method of dyeing of the invention, a washing step is not needed, for example when performing knife coating or rotary printing, a washing step is not needed.

It has been found advantageous to supplemented the installation of the present invention by a pretreating station for pretreating synthetic fibers, yarns, or fabrics before the fibers, yarns, or fabrics, for example a foulard which is also known as padding machine. In one embodiment, an installation comprises a fixation station, through which said fibers, yarn, or fabric applied with said dye formulation is/are conveyed after leaving the dyeing station for fixing the applied dye formulation to said fibers, yarn, or fabric, for example by heating said fibers, yarn, or fabric, e.g. convection heating by air, and/or by chemically fixing said dye formulation to said fibers, yarn, or fabric.

A fixation step leads to an increased dyeing efficiency. The encapsulated dye (formulation), method, installation, and use of the present are advantageous in that the encapsulated dye (formulation), method, installation, and use allow for dye stuff savings, for example dye stuff savings of about 20 %. The encapsulated dye (formulation), methods, installation, and uses of the present are advantageous in that the encapsulated dye (formulation), methods, installation, and uses allow achieving superior dyeing results. When referring to an "encapsulated dye (formulation)", an encapsulated dye and an encapsulated dye formulation are meant. In one embodiment, the use of an encapsulating agent, preferably cyclodextrin, for preparing encapsulated dye comprises performing a method of preparing an encapsulated dye and/or dye formulation of the invention. In one embodiment, the use of an encapsulated dye and/or dye formulation for dyeing a fiber, yarn, and/or fabric comprises performing a method of dyeing of the invention.

In one embodiment, to reduce or eliminate any shrinking properties of the dyed fibers, yarn, or fabric, an installation of the present invention can further comprise a sanforizing station, through which said fibers, yarn, or fabric is/are conveyed after leaving the fixation station. In one embodiment, an installation comprises a reservoir for an encapsulated dye and/or dye formulation, and such reservoir is preferably comprised by a dyeing vat. Optionally, the installation can comprise a preparation unit for preparing the encapsulated dye and/or or formulation thereof.

Compared to a conventional installation, a reduced number of stations is needed due to the efficiency of the encapsulated dye, and resulting in a reduced complexity of the installation which leads to lower manufacturing costs. Further to that, the use of only a single (or only two) dyeing station(s) surprisingly allows an increased reproducibility and precision in adjusting the amount of dye being picked up in the dyeing station, and/or in adjusting the color fastness, in particular the dry rubbing fastness, and/or the wet rubbing fastness, and/or the light fastness. Said advantages have been achieved when dyeing fibers, a yarn, or a fabric.

In one embodiment, the term "comprises" relates to "consists of'. In one embodiment, the term "dyeing" also relates to "coating with a dye". The inventors have found that encapsulated dye surprisingly allows to dye synthetic fibers at about neutral pH. Furthermore, the inventors have found that encapsulated dye surprisingly allows to dye synthetic fibers with unreduced vat dye, such as pigment form indigo. The inventors have further detected that, unexpectedly, fading characteristics specific for indigo-dyed denim fabrics can be obtained using an encapsulated dye or dye formulation thereof. Therefore, the encapsulated dye, dye formulation, method, installation, and uses of the invention successfully dye synthetic fibers, and thus synthetic fiber denim fabrics, particularly denim fabrics having a used-look, can be achieved.

### BRIEF DESCRIPTION OF THE FIGURES

The present invention is now further described by reference to the following figures. All methods mentioned in the figure descriptions below were carried out as described in detail in the examples.

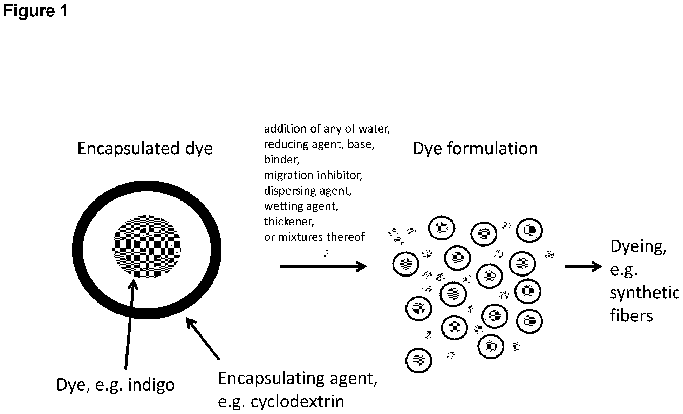

**Figure 1** shows a schematic representation of an encapsulated dye of the invention. An encapsulated dye of the invention comprises an encapsulating agent, for example cyclodextrin, and a dye, for example indigo. Typically, the encapsulating agent forms an outer wall of a capsule, which comprises a cavity. Such cavity of an encapsulated dye comprises the dye. An encapsulated dye is advantageous in that it can contain an unreduced vat dye, such as indigo in pigment form. An exemplary dye formulation comprises encapsulated dye and any of water, reducing agent, base, binder, migration inhibitor, dispersing agent, wetting agent, thickener, and mixtures thereof. Encapsulated dye and/or dye formulations can be used for efficiently dyeing fibers, yarns, and fabrics, comprising synthetic fibers.

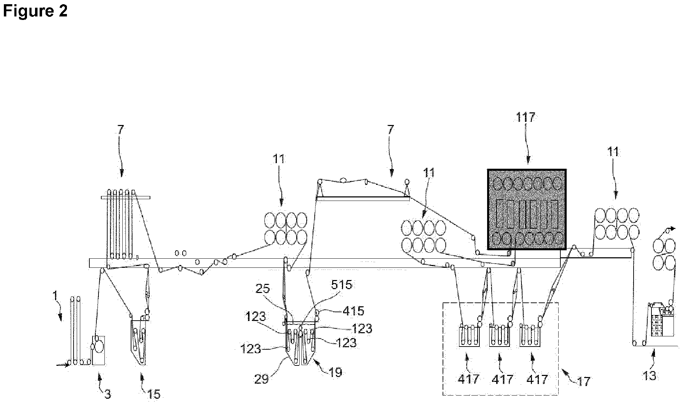

**Figure 2** shows a schematic illustration of an exemplary installation of the invention. In the exemplary installation, fibers, yarn, or fabric is/are conveyed through several stations by rotating drums starting with an accumulator station 1, followed in series by a calender 3, optionally a pretreating station 15, optionally a ventilation station 7, optionally a drying station 11, a dyeing station 19, optionally a warm air ventilation station 117, optionally a drying station 11, optionally fixation station(s) 17, such as three chemical fixation stations 417 or a thermal fixation station, optionally a drying station 11, and optionally ending with a sizing station 13. In one embodiment, a drying station 11 is located before the dyeing station 19. In contrast to a conventional dyeing installation, the upstream drying station 11, if present, causes that dried fibers, yarn, or fabric enter/s the dyeing station 19 having a reservoir for encapsulated dye formulation. This leads to a higher amount of dye formulation being picked up by the fibers, yarn, or fabric in the dyeing station 19. A higher amount of dye formulation being picked up increases the amount of dye that can be fixed to the fibers and thereby the achievable colorfulness, in particular the chroma and/or saturation, of the colored fibers, yarn, multitude of yarns, or fabric is enhanced. The installation preferably comprises only a single dyeing station, which is, compared to a conventional installation, a reduced number of stations, thereby reducing the complexity of the installation leading to lower manufacturing costs. Further to that, the use of a single dyeing station 19 surprisingly enables an increased reproducibility and precision in adjusting the amount of encapsulated dye being picked up in the dyeing station 19, and/or in adjusting the color fastness, in particular the dry rubbing fastness, and/or the wet rubbing fastness, and/or the light fastness. Said advantages have been achieved when dyeing fibers, a yarn, or a fabric using an encapsulated dye and/or dye formulation.
   As shown in figure 2, a single dyeing station 19 can be a dyeing vat 29, i.e. a reservoir substantially filled with a dye formulation through which the fibers, yarn, or fabric is/are conveyed. In one embodiment, the fibers, yarn, or fabric is/are conveyed in series over five rotating drums 123 within the dye formulation, through two pressure drums 515 within dye formulation, over five rotating drums 123 within the dye formulation, and through two pressure drums 415 outside of the dyeing vat 29 and outside of the dye formulation. The liquid level in the dyeing vat 29 is exemplary shown by the meandering line 25.
   The dash lined box indicates an optional fixation station 17. One embodiment of such an optional fixation station 17 is illustrated within the dash lined box as a cascade of three chemical fixation stations 417, through which the fibers, yarn, or fabric is/are conveyed after leaving the dyeing station 19 or a not shown coating station. For example, these fixation stations can comprise vats filled with an aqueous formulation containing at least one condensation product of an aliphatic polyamine and epihalohydrine, in particular epichlorohydrine. In such a fixation station, the fibers, yarn, or fabric can be conveyed by five rotating through said solution, and through two pressure drums opposing each other and building a slit when leaving the fixation stations.
   In another embodiment of the present invention, the optional fixation station can be a thermal fixation station, in particular a stenter. Complementing a dyeing installation with a fixation station 17 enables an increased reproducibility and precision in adjusting the color fastness, in particular the dry rubbing fastness, and/or the wet rubbing fastness, and/or the light fastness.

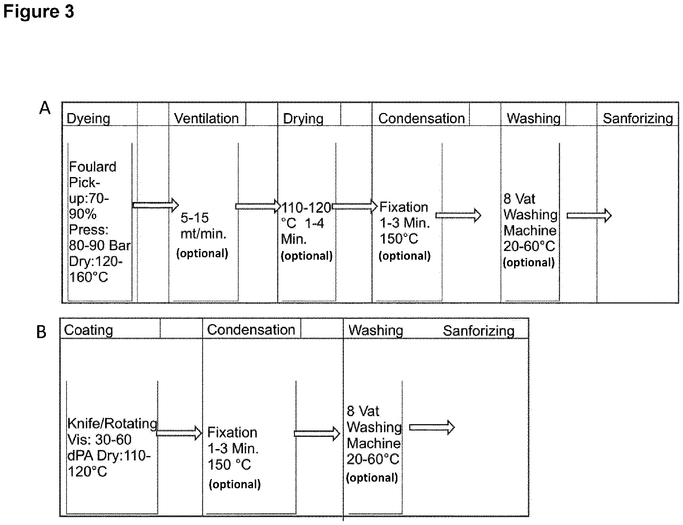

**Figure 3** shows an exemplary dyeing process of the invention, particularly a dyeing process using foulard dye pick-up (A) or coating (B). Typically, such processes involved dyeing and/or coating and fixation, and optionally ventilation, drying, washing, and/or sanforizing.

Reference is made to examples, which are given to illustrate, not to limit the present invention. The features of the present invention disclosed in the specification, the claims, and/or in the accompanying figures may, both separately and in any combination thereof, be material for realizing the invention in various forms thereof.

### REFERENCES

- 1: accumulator
- 3: calender
- 7: ventilation station
- 11: drying station
- 13: sizing station
- 15: pretreating station
- 17, 417: fixation station
- 19: dyeing station
- 25: liquid level
- 29: dyeing vat
- 117: warm air ventilation station
- 123: rotating drums in the dye formulation
- 415: pressure drums
- 515: pressure drums in the dye formulation

## Claims

1. **An encapsulated dye,** comprising a dye, preferably a vat dye, and an encapsulating agent, preferably a cyclodextrin.

2. The encapsulated dye according to claim 1, wherein said encapsulating agent, preferably said cyclodextrin, comprises any of α-cyclodextrin, β-cyclodextrin, γ-cyclodextrin, δ-cyclodextrin, hydroxypropyl-α-cyclodextrin, hydroxypropyl-β-cyclodextrin, hydroxypropyl-γ-cyclodextrin, hydroxypropyl-δ-cyclodextrin, guar gum, fullerene, and combinations thereof, preferably β-cyclodextrin and/or hydroxypropyl-β-cyclodextrin, wherein said cyclodextrin optionally comprises a modification selected from o-methylation and acetylation.

3. The encapsulated dye according to claim 1 or 2, wherein said dye is a vat dye, preferably selected from the group consisting of indigo, indigoid dyes, such as isoindigo, indirubin, and 6,6'-dibromoindigo, e.g. Tyrian purple, indanthren dyes, anthrachinon dyes, anthraquinone dyes, naphthalene dyes, and mixtures thereof;
and/or wherein the dye is a precursor dye, preferably a leuco dye selected from the group consisting of leuco-indigo, leuco-indigoid dyes, such as leuco-isoindigo, leuco-indirubin, and leuco-6,6'-dibromoindigo, e.g. leuco-Tyrian purple, leuco-indanthren dyes, leuco-anthrachinon dyes, leuco-anthraquinone dyes, leuco-naphthalene dyes, and mixtures thereof.

4. **A dye formulation** for dyeing a fiber, a yarn comprising a fiber, and/or a fabric comprising a fiber, wherein said fiber is preferably a synthetic fiber, wherein said dye formulation comprises an encapsulated dye of any one of claims 1 to 3,
and further comprises any of water, a reducing agent, a base, a binder, a migration inhibitor, a dispersing agent, a wetting agent, a thickener, and mixtures thereof.

5. The dye formulation according to claim 4, wherein
said reducing agent comprises any of thiourea dioxide, sodium dithionite, sodium hydrogen sulphite, hydroxyacetone, sodium hydroxymethylsulfinate, borohydride, ISOPON FPS, and mixtures thereof; and/or
said reducing agent has a concentration in the range of 1 g/L to 500 g/L, preferably 20 g/L to 350 g/L, more preferably 50 g/L to 250 g/L; and/or
said base comprises any of ammonia, alkali hydroxide, e.g. caustic soda, and mixtures thereof, preferably ammonia; and/or
said base has a concentration in the range of 0 g/L to 50 g/L, preferably 0 g/L to 10 g/L, more preferably 0 g/L to 5 g/L; and/or
said binder comprises any of a polyurethane, polyacrylate, a condensation product of an aliphatic polyamine and epihalohydrine, and a mixture thereof; and/or
said binder has a concentration in the range of 0 g/L to 500 g/L, preferably 0 g/L to 150 g/L; and/or
said migration inhibitor comprises any of a polyacrylic acid or a derivative thereof, e.g. IRGAPADOL MP, or a mixture thereof; and/or
said migration inhibitor has a concentration in the range of 0 g/L to 50 g/L, preferably 10 g/L to 30 g/L; and/or
said dispersing agent comprises any of an alkyl sulphate, alkylaryl sulphonate, fatty alcohol, condensation product of an amine and ethylene oxide, condensation product of naphthalene sulphonic acid and formaldehyde, e.g. SETAMOL WS, lignin sulphonate, and mixtures thereof; and/or
said dispersing agent has a concentration in the range of 1 g/L to 50 g/L, preferably 3 g/L to 15 g/L; and/or
said wetting agent comprises any of an organic hydroxy compound, a phosphoric acid ester, e.g. LEONIL EHC, Lava^{®} Wet MDF, and mixtures thereof; and/or
said wetting agent has a concentration in the range of 1 g/L to 30 g/L, preferably 1 g/L to 10 g/L; and/or
said thickener comprises an acrylic polymer, e.g. GEL FTR (LIQ); and/or
said thickener has a concentration in the range of 1 g/L to 30 g/L, preferably 8 g/L to 15 g/L; and/or
said dye has a concentration in the range of 1 g/L to 500 g/L, preferably 5 g/L to 250 g/L, more preferably 20 g/L to 120 g/L; and/or
said encapsulating agent, preferably said cyclodextrin, has a concentration in the range of 1 g/L to 800 g/L, preferably 20 g/L to 500 g/L, more preferably 40 g/L to 250 g/L.

6. **A method** of preparing an encapsulated dye, preferably as defined in any one of claims 1-3, and/or a dye formulation, preferably as defined in any one of claims 4-5, comprising
i) providing a dye, preferably a vat dye, and an encapsulating agent, preferably a cyclodextrin, optionally further providing any of water, a reducing agent, a base, a binder, a migration inhibitor, a dispersing agent, a wetting agent, a thickener, and mixtures thereof,
ii) mixing said dye and said encapsulating agent, optionally admixing said water, reducing agent, and/or base,
iii) optionally further admixing any of a binder, a migration inhibitor, a dispersing agent, a wetting agent, a thickener, and mixtures thereof.

7. The method according to claim 6, wherein said (ad)mixing of step ii) is performed at a temperature of from 1 °C to 100 °C, preferably 35 °C to 65 °C, more preferably 45 °C to 55 °C, e.g. 50 °C; and/or
wherein said admixing of step iii) is performed at a temperature of from 1 °C to 100 °C, preferably 10 °C to 55 °C, more preferably 20 °C to 28 °C, e.g. 25 °C; and/or
wherein said (ad)mixing of step ii) and/or iii) is performed for a period of from 1 sec to 48 h, preferably 1 min to 5 h, more preferably 3 min to 2 h, e.g. about 1 h; and/or
wherein said (ad)mixing of step ii) and/or iii) is performed by stirring, preferably at revolutions per minute in the range of from 500 to 2000 rpm, more preferably from 1000 to 1500 rpm.

8. The method according to claim 6 or 7, wherein
said dye is provided at a concentration in the range of 1 g/L to 500 g/L, preferably 5 g/L to 250 g/L, more preferably 10 g/L to 80 g/L; and/or
said encapsulating agent, preferably said cyclodextrin, is provided at a concentration in the range of 1 g/L to 800 g/L, preferably 20 g/L to 250 g/L, more preferably 30 g/L to 150 g/L; and/or
said reducing agent is provided at a concentration in the range of 0 g/L to 500 g/L, preferably 0 g/L to 250 g/L, more preferably 0 g/L to 80 g/L; and/or
said base is provided at a concentration in the range of 0 g/L to 50 g/L, preferably 0 g/L to 10 g/L, more preferably 0 g/L to 5 g/L.

9. **A method** of dyeing a fiber, a yarn comprising a fiber, and/or a fabric comprising a fiber, wherein said fiber is preferably a synthetic fiber, wherein said method comprises the steps:
i) providing a fiber, a yarn comprising a fiber, and/or a fabric comprising a fiber, wherein said fiber is preferably a synthetic fiber,
ii) providing an encapsulated dye, as defined in any one of claims 1-3, and/or a dye formulation comprising an encapsulated dye, as defined in any one of claims 4-5,
iii) optionally, pretreating said fiber, yarn, and/or fabric,
iv) dyeing said fiber, yarn, and/or fabric, optionally pretreated fiber, yarn, and/or fabric, with said encapsulated dye and/or dye formulation,
v) optionally, fixing said dye on said fiber, yarn, and/or fabric,
vi) optionally, washing said fiber, yarn, and/or fabric at a temperature of from 1 to 100 °C, preferably of from 10 to 70 °C, more preferably of from 20 to 60 °C.

10. The method according to claim 9, wherein
said dyeing is performed at a pH in the range of from pH 4.5 to 10, preferably in the range of from pH 5 to 9.5, more preferably in the range of from pH 5 to 9, e.g. neutral pH; and/or
said dyeing is performed at a temperature of from 3 °C to 80 °C, preferably 7 °C to 40 °C, more preferably 20 °C to 25 °C; and/or
said dyeing is performed at a pressure of from 10 kPa to 10.000 kPa, preferably at atmospheric pressure; and/or
said dyeing is performed for a period of from 1 sec to 48 h, preferably 0.5 min to 8 h, more preferably 1 min to 2 min.

11. The method according to claim 9 or 10, wherein said fixing is performed at a temperature of from 70 °C to 200 °C, preferably of from 100 °C to 180 °C, more preferably of from 140 °C to 160 °C, e.g. 150 °C, for a period of 10 sec to 10 min, preferably 30 sec to 5 min, more preferably 1 min to 3 min.

12. The method according to any one of claims 9-11, further comprising a step of drying said fiber, yarn, and/or fabric at a temperature of from 70 °C to 200 °C, preferably of from 90 °C to 170 °C, more preferably of from 110 °C to 160 °C, e.g. 120 °C to 160 °C or 110 °C to 120 °C, for a period of 1 sec to 10 min, preferably 30 sec to 5 min, more preferably 1 min to 4 min, wherein said drying is performed prior to or after said dyeing and/or prior to or after said fixing, preferably in between said dyeing and said fixing.

13. The method according to any one of claims 9-12, wherein said pretreating comprises a pretreatment of said fiber, yarn, and/or fabric with any of a lipase enzyme, such as lipase from Candida sp., nano-sized polyurethane particles, and/or a base.

14. **A fiber, a yarn, and/or a fabric** comprising an encapsulated dye of any one of claims 1-3,
wherein, preferably, said fiber, yarn, and/or fabric comprise(s) or consist(s) of synthetic fiber(s), e.g. polyester fiber(s) or polyamide fiber(s),
wherein, optionally, said fiber, yarn, and/or fabric have a wash-fastness of 1.5 to 5, preferably 3 to 5, a light-fastness of 2 to 7, preferably 4 to 5, and/or a dry-rubbing fastness of 1 to 5, preferably 2 to 4.

15. **A fiber, a yarn, and/or a fabric dyed** with an encapsulated dye, as defined in any one of claims 1-3, and/or with a dye formulation comprising an encapsulated dye, as defined in any one of claims 4-5, preferably using a method as defined in any one of claims 9-13.

16. **An installation** for dyeing a fiber, a yarn, and/or a fabric, comprising at least one reservoir for an encapsulated dye, preferably as defined in any one of claims 1-3, and/or for a dye formulation comprising an encapsulated dye, preferably as defined in any one of claims 4-5,
optionally further comprising a preparation unit, wherein the preparation unit is for preparing the encapsulated dye and/or the dye formulation comprising an encapsulated dye, preferably wherein the preparation unit and the at least one reservoir are connected.

17. **Use of a cyclodextrin** for preparing an encapsulated dye, preferably an encapsulated vat dye.

18. **Use of an encapsulated dye,** preferably an encapsulated dye as defined in any one of claims 1-3, or of a dye formulation comprising an encapsulated dye, preferably a dye formulation as defined in any one of claims 4-5, for dyeing a fiber, a yarn, and/or a fabric; preferably for dyeing a fiber, a yarn comprising a fiber, and/or a fabric comprising a fiber, wherein said fiber is a synthetic fiber.
